# EUROPÄISCHE PATENTANMELDUNG

(11) **EP 2 451 055 A2**
(43) Veröffentlichungstag der Anmeldung: **09.05.2012**
(21) Anmeldenummer: 12000543.4
(22) Anmeldetag: 16.12.2009
(51) Int. Cl.: H02K 5/24

(54) **Elektromotorischer Antrieb, insbesondere Gebläseantrieb**

(30) Priorität: 17.12.2008 DE 102008062432
(62) Teilanmeldung aus: 09809055.8
(71) Anmelder: Brose Fahrzeugteile GmbH & Co. KG, Würzburg, 97076 Würzburg (DE)
(72) Erfinder: Stöhling, Marco, 97795 Schondra (DE); Bauer, Karl-Heinz, 97080 Würzburg (DE); Rüb, Michael, 97076 Würzburg (DE); Wittstadt, Frank, 97334 Sommerach (DE); Diller, Hannelore, 97228 Rottendorf (DE); Tiemeyer, Peter, 97076 Würzburg (DE)
(74) Vertreter: FDST Patentanwälte

(57) **Zusammenfassung**

Bei einem elektromotorischen Antrieb, insbesondere einem Gebläseantrieb eines Kraftfahrzeugs, mit einem Kommutatormotor (1), dessen Motorwelle (4) auf axial gegenüberliegenden Seiten (BS, AS) in jeweils mittels eines Lagerschildes (7,8) abgedeckten Wellenlagern (9,10) drehbar gelagert ist, ist zur Schalldämpfung insbesondere lagerspielbedingter Anschlaggeräusche und Vibrations- oder Heulgeräusche auf der dem Lagerschild (7,8) abgewandten Lagerseite des oder jedes Wellenlagers (9,10) ein Dämpfungssystem (14) angeordnet.

## Beschreibung

Die Erfindung betrifft einen elektromotorischen Antrieb gemäß dem Oberbegriff des Anspruchs 1. Ein derartiger Antrieb ist aus der US 5,113,104 bekannt.

Aus der EP 182 145 A1 und aus der DE 199 09 507 C1 sind Gebläse einer Heizungs- und Klimaanlage eines Kraftfahrzeugs mit einem von einem Elektromotor angetriebenen Lüfterrad bekannt, das auf der Motorwelle befestigt ist.

Aus der DE 295 13 633 U1 ist es darüber hinaus bekannt, dass die Motorwelle sowohl auf der Bürstensystemseite (BS), auf der mit den Bürsten kontaktierte Kommutatorlamellen des Motors angeordnet sind, als auch auf der gegenüberliegenden anderen Seite (AS) in als Kalottenlager ausgeführten Gleitlagern drehbar gelagert ist. Dabei sind die Kalottenlager mittels einer Klemmbrille gegen ein Lagerschild gepresst. BS-seitig ragt die Motorwelle aus dem kommutatornahen Lagerschild mit einem Wellenabschnitt heraus, auf dem das Lüfterrad über dessen zentraler Radnabe befestigt ist. Derartige elektromotorische Antriebe weisen ein Axialspiel der Motorwelle und damit des Motorläufer-Laufrad-Systems auf, das häufig zu unerwünschten Geräuschen führt.

Der Erfindung liegt die Aufgabe zugrunde, einen elektromotorischen Antrieb der eingangs genannten Art hinsichtlich einer möglichst geringen Geräuschentwicklung zu verbessern.

Diese Aufgabe wird erfindungsgemäß gelöst durch die Merkmale des Anspruchs 1. Vorteilhafte Ausgestaltungen und Weiterbildungen sowie Varianten der Erfindung sind Gegenstand der Unteransprüche.

Hierzu ist auf der dem Lagerschild abgewandten Lagerseite des BS-seitigen Wellenlagers und/oder des AS-seitigen Wellenlagers ein Dämpfungssystem zur Schalldämpfung angeordnet. Das Dämpfungssystem dient zur Schallpegelreduzierung insbesondere lagerspielbedingter Anschlaggeräusche, jedoch zusätzlich auch zur Dämpfung sogenannter U-Töne (Heulgeräusche), die durch betriebsbedingte Störungen bei jeder Motorumdrehung und damit verbundenen Resonanzerscheinungen verursacht werden.

Die Erfindung geht von der Überlegung aus, dass die betriebsbedingt verursachten Geräusche eines derartigen Gebläseantriebs einerseits Anschlaggeräusche sind, die durch eine axiale Auslenkung der Motorwelle und des darauf aufgesetzten Laufradsystems verursacht werden. Andererseits werden durch das Ablaufen der Bürsten über den Kommutatorwellen zusätzlich Vibrationsgeräusche verursachte, die über das Motorgehäuse emittiert werden. Dabei erfolgt die Geräuschentwicklung innerhalb des Motors vom Kommutator über das Wellenlager und das Lagerschild auf das Motorgehäuse.

Dieser Körperschall, der zusätzlich auch vom mehrspeichigen Lüfterrad erzeugt werden kann und auf das Motorgehäuse übertragen wird, entsteht in einem mit den Resonanzfrequenzen des Gesamtsystems, insbesondere in gehäuseteilspezifischen Resonanzstellen, korrelierten Drehzahlbereich des Elektro- oder Kommutatormotors. Kann nun die Schallübertragungsstrecke zwischen dem Kommutor einerseits und dem Lüfterrad andererseits über das Wellenlager auf das Motorgehäuse verhindert oder zumindest reduziert werden, so kann demzufolge auch der Körperschall reduziert werden.

Andererseits können infolge einer axialen Auslenkung der über die Motorwelle miteinander gekoppelten Systemteile, nämlich vom Läufer und vom Kommutator des Motors sowie durch das Lüfterrad des Gebläses verursachte Anschlaggeräusche verhindert oder zumindest reduziert werden, wenn auf der dem Lagerschild abgewandten Lagerseite des jeweiligen Wellenlagers ein zur Bedämpfung der lagerspielbedingten Anschlaggeräusche geeignetes Dämpfungsmittel angeordnet ist.

Zusätzlich zur Dämpfung der Anschlaggeräusche, die BS-seitig durch das dort praktisch zwischen dem Kommutator und dem Wellenlager eingesetzte und das Axialspiel aufnehmende Dämpfungssystem verhindert oder reduziert werden, werden auch die durch das Wechselspiel zwischen den Bürsten und den Kommutatorlamellen erzeugten Vibrationen mittels des Dämpfungssystems zuverlässig gedämpft.

Das Dämpfungssystem weist eine Dichtscheibe und eine nachfolgend als Gleitscheibe bezeichnete Anlaufscheibe mit Gleiteigenschaften auf. Zwischen der Dichtscheibe und der Gleitscheibe ist geeigneterweise ein Federweg definiert, der zweckmäßigerweise im Zehntelmillimeterbereich liegt und vorzugsweise kleiner oder gleich 0,2 mm ist. Zwischen die Dichtscheibe und die Gleitscheibe ist eine auf die Motorwelle aufgesetzte federringartige Wellfeder als bevorzugtes Federelement eingesetzt. Erkanntermaßen trägt diese Wellfeder erheblich oder sogar im Wesentlichen zur Bedämpfung der Heul- oder U-Töne bei.

Das Dämpfungssystem weist geeigneterweise auf der dem Wellenlager zugewandten Scheibenseite der Dichtscheibe ein Dämpfungselement auf. Dieses ist vorzugsweise ringförmig. Im zusammengesetzten Zustand des Dichtungssystems liegt die Wellfeder geeigneterweise in einem zwischen dem Dämpfungselement der Dichtscheibe und der Motorwelle gebildeten Ringraum ein, so dass das Dämpfungselement die Wellfeder koaxial umgibt.

Das Dichtungssystem weist darüber hinaus vorzugsweise auch eine Wellenabdichtung zwischen der Dichtungsscheibe und der Rotorwelle auf. Hierzu sind die Dichtscheibe, das Dämpfungselement und die Wellenabdichtung vorzugsweise einstückig aus einem Zweikomponenten-Kunststoff im Spritzgussverfahren hergestellt. Die Dichtscheibe ist dabei aus einem vergleichsweise harten Material oder Werkstoff, während die mit diesem wiederum einstückige Wellenabdichtung aus einem vergleichsweise weichen Dämpfungswerkstoff besteht. Als Dämpfungswerkstoff eignet sich insbesondere ein thermoplastisches Elastomer.

Die ebenso wie das Dämpfungselement ring- oder zylinderförmige Wellenabdichtung ist im Querschnitt L-förmig. Ein sich entlang der Rotorwelle erstreckender axialer L-Schenkel des entsprechenden zylinder- oder hülsenförmigen Abschnitts der Wellenabdichtung stellt einen zuverlässigen Presssitz der Dichtscheibe auf der Motorwelle her. Ein sich an diesen axialen L-Schenkel anschließender radialer L-Schenkel des entsprechend kreisringförmigen Abschnitts der Wellenabdichtung hintergreift die Dichtscheibe auf der dem Wellenlager abgewandten Scheibenrückseite. Dieser radiale L-Schenkel der Wellenabdichtung sowie ggf. eine Anzahl von vorzugsweise bogen- oder teilkreisartig ausgeführten Dämpfungsstellen, die ebenfalls aus dem vergleichsweise weichen Dämpfungswerkstoff bestehen, dienen gleichfalls als Dämpfungselement des Dämpfungssystems in dessen Anlage am Kommutator.

In zweckmäßiger Weiterbildung sind die Dichtscheibe und die Gleitscheibe miteinander verrastet. Hierzu sind geeigneterweise an die Dichtscheibe - vorzugsweise drei um 120° zueinander versetzt angeordnete - Rastelemente angeformt. Die Rastelemente sind aus Raststegen gebildet, die zur Gleitscheibe hin gerichtet sind. An die Raststege sind in vorgegebenem Abstand von der Dichtscheibe bzw. dem mit diesem einstückigen Dämpfungselement endseitig Rastnocken angeformt, die im verrasteten Zustand die Gleitscheibe hintergreifen. Durch die axiale Dicke dieser Gleitscheibe und durch den Abstand der Rastnocken zum Dämpfungselement der Dichtscheibe ist der zwischen dieser und der Gleitscheibe gebildete Federweg definiert, der dem Federelement zur Verfügung steht.

An die Gleitscheibe sind umfangsseitig - wiederum zweckmäßigerweise um 120° zueinander versetzt - radial nach außen ragende Mitnehmerelemente oder - nocken angeformt. Diese bilden im verrasteten Zustand der Gleitscheibe mit der Dichtscheibe einen Formschluss in der entsprechenden Drehrichtung des Motors bzw. der Motorwelle, sobald die Mitnehmernocken den im Bogenmaß beispielsweise 120° betragenden Abstand zwischen zwei Rastelementen der Dichtscheibe bei der ersten Inbetriebnahme überstrichen oder durchfahren haben.

Die Halterung des Dämpfungssystems auf der Motorwelle ist zweckmäßigerweise als Presssitz ausgeführt. Dabei ist die Presskraft oder Haftung der Gleitscheibe auf der Motorwelle größer als diejenige der Gleitscheibe. Dies ist bereits dadurch bedingt, dass die Dichtscheibe im Gegensatz zur Gleitscheibe über den elastisch verformbaren Dämpfungswerkstoff auf die Motorwelle aufgepresst ist, was auch eine gewisse Verschieblichkeit der Dichtscheibe auf der Motorwelle zulässt. Diese Verschieblichkeit hat den Vorteil, dass bei der Montage, d.h. beim Verrasten der beiden Scheiben zu deren Verbindung zum Dämpfungssystem zumindest die Dichtscheibe eine axiale Verschiebung entlang der Motorwelle auf die Gleitscheibe ausführen kann.

Im Anschluss an eine erste 120°-Relativdrehung zwischen den beiden Scheiben ist der Formschluss zwischen den Raststegen der Dichtscheibe und den Nocken der Gleitscheibe hergestellt, so dass dann stets beide Scheiben und somit das gesamte Dämpfungssystem fest auf der Motorwelle sitzen und mit dieses gegenüber dem ortsfesten Wellen- oder Kalottenlager rotiert. Um infolge der Zentrifugalkraft nach außen geschleudertes Gleitlageröl aufzufangen und an das Lager zurückzuführen, ist die Dichtscheibe vorzugsweise schalenartig mit einem am Scheibenumfang zum Wellenlager hin gerichteten Ölfangkragen ausgebildet.

Das geeigneterweise als Material der Gleitscheibe gewählte thermoplastische Elastomer, insbesondere ein thermoplastisches Copolyester (Hytrel), weist besonders geeignete Gleitreibungseigenschaften für die Materialpaarung mit dem üblicherweise aus Stahl bestehenden Kalottenlager auf.

Die mit der Erfindung erzielten Vorteile bestehen insbesondere darin, dass durch den Einsatz eines geeigneten Dämpfungssystems, vorzugsweise in beiden Lagerstellen der Motorwelle eines elektromotorischen Gebläseantriebs, üblicherweise durch axiale Wellenauslenkungen einerseits sowie vom Läufer-Laufrad-System und/oder Kommutator-Bürsten-System erzeugte Geräusche oder Töne zumindest erheblich gedämpft werden. Damit wird der Schallpegel des Körperschalls des Gesamtsystems über den Drehzahlbereich des Elektromotors, insbesondere auch drehzahlabhängige lokale Schallpegel im Bereich der Resonanzfrequenzen der Gehäuse- oder Systemteile, erheblich reduziert.

Durch die Verwendung einer an sich bekannten Klemmbrille, die zwischen das Wellenlager und das Dämpfungssystem eingelegt ist, und die sich umfangsseitig am Lagerschild abstützt, wird das zweckmäßigerweise als Kalottenlager ausgeführte Wellenlager zuverlässig in Richtung auf das dem Dämpfungssystem gegenüberliegende Lagerschild gepresst.

Nachfolgend wird ein Ausführungsbeispiel der Erfindung anhand einer Zeichnung näher erläutert. Darin zeigen:
- Fig. 1: teilweise im Längsschnitt einen elektromotorischen Antrieb für ein Heizungs- und Klimaanlagegebläse in einem Kraftfahrzeug mit einem BS-seitigen und einem AS-seitigen Kalottenlager mit einem erfindungsgemäßen Dämpfungssystem,
- Fig. 2: in einer perspektivischen Darstellung das erfindungsgemäße Dämpfungssystem in einem Vormontagezustand mit auf der Motorwelle angeordnet einer ringförmigen Dichtscheibe und einem Federring sowie einer ringförmigen Dichtscheibe am B-seitigen Kalottenlager,
- Fig. 3: im Längsschnitt das Dämpfungssystem in Anlage am Kalottenlager im Montagezustand mit unter Ausbildung eines definierten Federweges miteinander verrasteten Systemscheiben, und
- Fig. 4: eine Ansicht auf die dem Kommutator des elektromotorischen Antriebs zugewandte Rückseite des Dämpfungssystems.

Einander entsprechende Teile sind in allen Figuren mit den gleichen Bezugszeichen versehen.

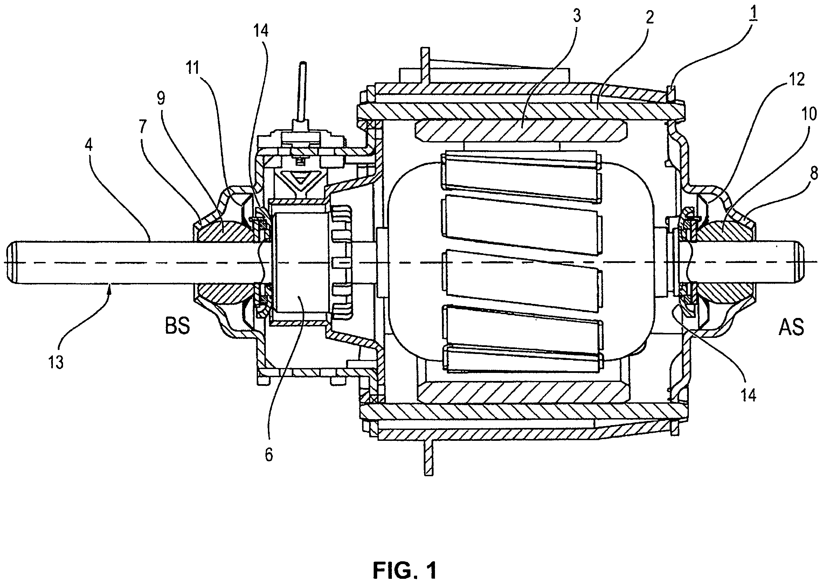

Fig. 1 zeigt einen elektromotorischen Antrieb in Form eines Kommutatormotors 1 mit einem Motorgehäuse (Poltopf) 2, an dessen Innenumfang eine der Polzahl des Motors 1 entsprechende Anzahl von schalenförmigen Erreger- oder Dauermagneten 3 gehalten sind. Eine Motorwelle 4 trägt in nicht näher dargestellter Art und Weise den als Rotorblechpaket mit darin eingewickelten Rotorwicklungen ausgeführten Läufer (Rotor) 5 des Kommutatormotors 1. Ein ebenfalls auf der Motorwelle 4 befestigter Kommutator 6 weist in nicht näher dargestellter Art und Weise Kommutatorlamellen mit Lamellenanschlüssen auf, die mit den Rotorwicklungen des Läufers 5 verbunden sind. Die Lamellen des Kommutators 6 werden in an sich bekannter Weise von Bürsten kontaktiert. Diese Motorseite wird häufig auch als Bürsten- oder Bürstensystemseite oder kurz mit BS (BS-seitig) bezeichnet. Die gegenüberliegende Seite wird mit AS (AS-seitig) bezeichnet.

An diesen beiden Seiten BS und AS des Kommutatormotors 1 sind am kommutatornahen Motorende ein BS-seitiges Lagerschild 7 am Motorgehäuse 2 befestigt. Am gegenüberliegenden, kommutatorfemen Wellenende der Motorwelle ist ein AS-seitiges Lagerschild 8 am Motorgehäuse 2 befestigt. Die beiden Lagerschilde 7,8 nehmen Kalottenlager 9 bzw. 10 auf, in denen die Motorwelle 4 über einen Ölfilm drehbar gelagert ist. Die beiden ortsfesten Kalottenlager 9,10 werden jeweils mittels einer Klemmbrille 11, 12 gegen das jeweilige Lagerschild 7 bzw. 8 gepresst und verklemmt. Die Klemmbrille 11,12 stützt sich dabei am jeweiligen Lagerschild 7 bzw. 8 ab.

Das kommutatorseitige Wellenende der Motorwelle 4 ragt BS-seitig mit einem genügend langen Wellenabschnitt 13 aus dem Lagerschild 7 heraus, um gemäß der in Fig. 1 der DE 295 13 633 U1 bekannten Art und Weise ein Lüfterrad eines Heizungs- und Klimaanlagengebläses eines Kraftfahrzeuges aufzunehmen, welches Lüfterrad dort mit dessen Nabe auf diesen Wellenabschnitt der Motorwelle 4 aufgepresst ist. Der Kommutatormotor 1, der bei dessen Drehung das Lüfterrad antreibt, dient somit als Gebläseantrieb.

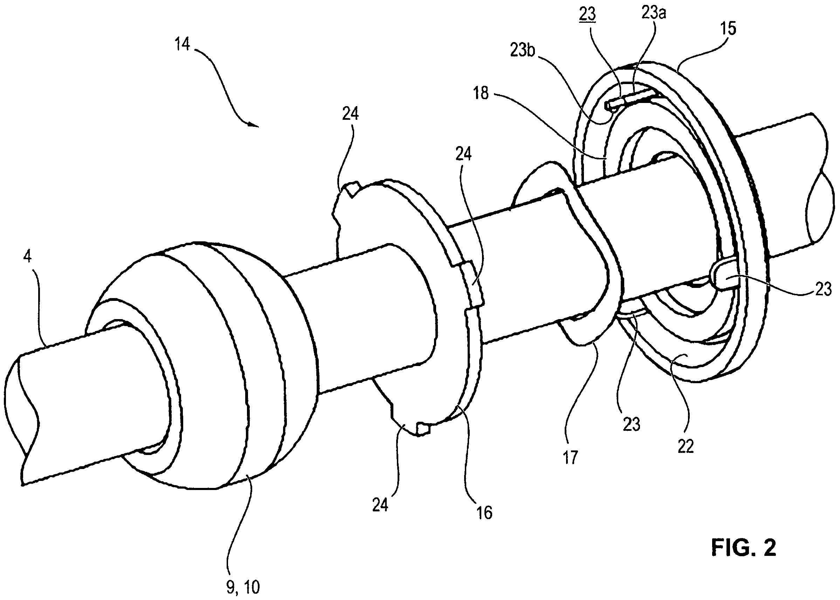

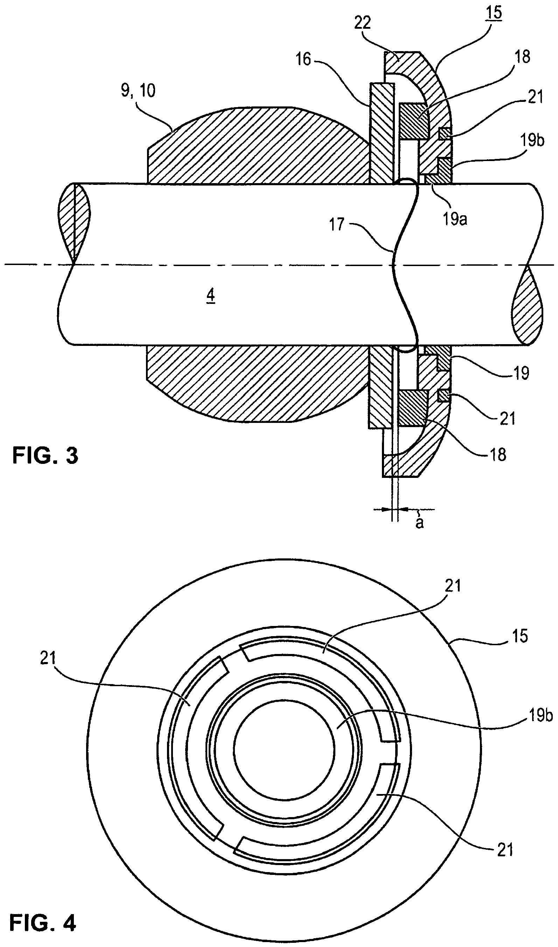

Wie aus den Fig. 2 und 3 vergleichsweise deutlich ersichtlich ist, ist vorzugsweise sowohl an der BS-seitigen Lagerstelle als auch an der AS-seitigen Lagerstelle jeweils ein Dämpfungssystem 14 vorgesehen. Dieses ist auf der dem jeweiligen Lagerschild 7,8 abgewandten Lagerseite des Kalottenlagers 9 bzw. 10 auf die Motorwelle 4 aufgesetzt. Das Dämpfungssystem 14 nimmt das sich in Wellenlängsrichtung der Motorwelle 4 erstreckende Axialspiel auf.

Das Dämpfungssystem 14 dient einerseits zur Bedämpfung von Anschlaggeräuschen, die durch die axiale Auslenkung des vom Läufer 5 und Kommutator 6 inklusive Motorwelle 4 gebildeten System verursacht werden, zu dem im Falle des Gebläseantriebs auch das Lüfterrad gehört. Das Dämpfungssystem 14 reduziert somit denjenigen Schallpegel und bedämpft auch diejenigen Geräusche, die als vom Kommutator-Bürstensystem erzeugte U- oder Heultöne bekannt sind. Die entsprechende Geräuschentwicklung ist auf Störungen pro Motorumdrehung zurückzuführen, die durch die Relativbewegung der Kommutatorlamellen und der darüber fahrenden Bürsten verursacht werden. Diese Störungen verursachen in dem relativ großen Kunststoffgehäuse charakteristische Geräusche in gehäuseteilspezifischen Resonanzstellen.

Gemäß den Fig. 2 und 3 setzt sich das Dämpfungssystem 14 im Wesentlichen aus einer Dichtscheibe 15 und einer Gleitscheibe 16 sowie einer dazwischen angeordneten Wellfeder 17 zusammen. Die Gleitscheibe 16 ist dem jeweiligen Kalottenlager 9, 10 zugewandt.

Wie in Fig. 3 vergleichsweise deutlich ersichtlich ist, ist zwischen der Dichtscheibe 15 und der Gleitscheibe 16 ein definierter Federweg a gebildet. Dieser beträgt ca. 0,2 mm. Im dargestellten, zusammengesetzten Montagezustand des Dämpfungssystems 14 liegt die Wellfeder 17, die ebenso wie die Dichtscheibe 15 und die Gleitscheibe 16 auf der Motorwelle 4 sitzt, zwischen diesen beiden Scheiben 15 und 16. Dabei umgibt ein an die Dichtscheibe 15 angeformtes und kreisringartig geformtes Dämpfungselement 18 die Wellfeder 17 koaxial.

Das Dämpfungselement 18 ist vorzugsweise einstückiger Bestandteil der Dichtscheibe 15. Das Dämpfungselement 18 besteht aus einem Dämpfungswerkstoff, der gegenüber dem vergleichsweise harten Werkstoff der übrigen Dichtscheibe 15 vergleichsweise weich ist. Eine ebenfalls aus dem Dämpfungswerkstoff bestehende und mit der übrigen Dichtscheibe 16 wiederum einstückige Wellenabdichtung 19 umgreift die Motorwelle 4 und bildet dabei einen zylinderförmigen oder hülsenartigen Dichtungsübergang der Dichtscheibe 15 auf die Motorwelle 4.

Diese Wellenabdichtung 19 ist gemäß Fig. 3 im Querschnitt etwa L-förmig. Dabei umgibt ein axialer L-Schenkel 19a die Motorwelle 4 im Übergangsbereich oder Öffnungsbereich der Dichtscheibe 16, während ein sich daran anschließender radialer L-Schenkel 19b sich auf die Scheibenrückseite 20 der Dichtscheibe 15 erstreckt und diese dort hintergreift. Dort wirkt der radiale L-Schenkel 19b als Anlagedämpfung des Dämpfungssystems 13 gegenüber dem Kommutator 6.

Diese Anlagedämpfung am Kommutator 6 wird unterstützt durch weitere Dämpfungsstege 21, die in der die Scheibenrückseite 20 der Dichtscheibe 15 zeigenden Fig. 4 sichtbar sind. Die Dämpfungsstege 21 bestehen ebenfalls aus dem vergleichsweise weichen Dämpfungswerkstoff. Dieser erstreckt sich infolge der vorzugsweise im Spritzgussverfahren aus einem Zweikomponente-Kunststoff hergestellten Dichtscheibe 15 von deren der Gleitscheibe 16 zugewandten Innenseite zur gegenüberliegenden Scheibenrückseite 20 über lokale Materialauslassungen.

Der vergleichsweise weiche Dämpfungswerkstoff bildet dabei sowohl das innenseitige ringförmige Dämpfungselement 18 als auch die Wellenabdichtung 19 und die drei rückseitigen Dämpfungsstege 21 der Dichtscheibe 15. Diese ist schalenförmig mit einem Ölfangkragen 22 ausgeführt, um zum Schutz des Kommutators 6 betriebsbedingt nach außen geschleudertes Gleitlageröl aufzufangen.

Wie Fig. 2 zeigt, sind an die Dichtscheibe 15 innenseitig drei zueinander im Bogenmaß um 120° versetzt angeordnete Rastelemente 23 angeformt, die jeweils aus einem Raststeg 23a mit endseitig angeformter Rastnocke 23b bestehen. Im miteinander verrasteten Zustand der Dichtscheibe 15 und der Gleitscheibe 16 hintergreifen diese Rastnocken 23b und somit die Rastelemente 23 die Gleitscheibe 16. Dadurch ist die auf die Motorwelle 4 aufgepresste Dichtscheibe 15 zur ebenfalls auf die Motorwelle 4 aufgepressten, jedoch praktisch unverschiebbaren Gleitscheibe 16 hin axial verschiebbar und wird somit durch die Verrastung an dieser fixiert.

An die Gleitscheibe 16 sind wiederum jeweils um 120° versetzte Mitnehmernocken 24 angeformt. Diese werden beim Verrasten der Dichtscheibe 15 mit der Gleitscheibe 16 an einer zufälligen Position zwischen jeweils zwei der drei Rastelemente 23 der Dichtscheibe 15 angeordnet sein. Infolge der ersten Motorbetätigung des Antriebs 1 werden sich die Mitnehmernocken 24 in der vorgegebenen Drehrichtung der Motorwelle 4 an die nächstgelegenen Rastelemente 23 formschlüssig anlegen, so dass das Dämpfungssystem 14 dann als starres Scheibengebilde mit einliegender Wellfeder 17 hergestellt ist.

Da das Dämpfungssystem 14 mit der Motorwelle 4 und damit auch mit dem Kommutator 6 synchron rotiert, sind kommutatorseitig nur Anlage- oder Anpresseffekte zu berücksichtigen, während auf der gegenüberliegenden Lagerseite betriebsbedingt eine Relativbewegung zwischen dem Dämpfungssystem 14 und dem ortsfesten Kalottenlager 9,10 vorhanden ist. Daher sind dort Gleit- bzw. Reibungseffekte zu berücksichtigen, so dass die Gleitscheibe 16 vorzugsweise aus einem geeigneten Gleitwerkstoff gebildet oder mit geeigneten Gleiteigenschaften versehen ist. Hierzu besonders geeignet ist ein thermoplastisches Elastomer, beispielsweise ein von der Firma DuPont unter der Bezeichnung Hytrel geführtes thermoplastisches Copolyester, als Gleitscheibenwerkstoff.

### Bezugszeichenliste

- 1: Kommutatormotor
- 2: Motorgehäuse
- 3: Erregermagnet
- 4: Motorwelle
- 5: Läufer
- 6: Kommutator
- 7: Lagerschild
- 8: Lagerschild
- 9: Kalottenlager
- 10: Kalottenlager
- 11: Klemmbrille
- 12: Klemmbrille
- 13: Wellenabschnitt
- 14: Dämpfungssystem
- 15: Dichtscheibe
- 16: Gleitscheibe
- 17: Federelement/Wellfeder
- 18: Dämpfungselement
- 19: Wellenabdichtung
- 19a: axialer L-Schenkel
- 19b: radialer L-Schenkel
- 20: Scheibenrückseite
- 21: Dämpfungssteg
- 22: Ölfangkragen
- 23: Rastelement
- 23a: Raststeg
- 23b: Rastnocke
- 24: Mitnahmenocke

- a: Federweg

## Patentansprüche

1. Elektromotorischer Antrieb, insbesondere Gebläseantrieb eines Kraftfahrzeugs, mit einem Kommutatormotor (1), dessen Motorwelle (4) auf axial gegenüberliegenden Seiten (BS, AS) in jeweils mittels eines Lagerschildes (7,8) abgedeckten Wellenlagern (9,10) drehbar gelagert ist, wobei auf der dem Lagerschild (7,8) abgewandten Lagerseite des oder jedes Wellenlagers (9,10) ein Dämpfungssystem (14) zur Schalldämpfung, insbesondere lagerspielbedingter Anschlaggeräusche und betriebsbedingter Heulgeräusche (U-Töne), angeordnet ist,
**dadurch gekennzeichnet,**
- **dass** das Dämpfungssystem (14) eine Dichtscheibe (15) und eine dem Wellenlager (9,10) zugewandte Gleitscheibe (16) aufweist, die auf der Motorwelle (4) axial verschiebbar ist, und
- **dass** die Gleitscheibe (16) umfangsseitig eine Anzahl von Mitnehmerelementen (24), zweckmäßigerweise drei gleichmäßig verteilt angeformte Mitnehmernocken, aufweist.

2. Elektromotorischer Antrieb nach Anspruch 1,
**dadurch gekennzeichnet,**
**dass** zwischen der Dichtscheibe (15) und der Gleitscheibe (16) ein Federweg (a), insbesondere zwischen 0,1 mm und 0,5mm, zweckmäßigerweise zwischen 0,1mm und 0,3mm, vorzugsweise zwischen ≤ 0,2mm, eingestellt ist.

3. Elektromotorischer Antrieb nach Anspruch 1 oder 2,
**dadurch gekennzeichnet,**
**dass** das Dämpfungssystem (14) ein Federelement (17), insbesondere eine federringartige Wellfeder, aufweist.

4. Elektromotorischer Antrieb nach Anspruch 3,
**dadurch gekennzeichnet,**
**dass** das Federelement (17) zwischen der Dichtscheibe (15) und der Gleitscheibe (16) angeordnet ist.

5. Elektromotorischer Antrieb nach einem der Ansprüche 1 bis 4,
**dadurch gekennzeichnet,**
**dass** das Dämpfungssystem (14) auf der dem Wellenlager (9,10) zugewandten Innenseite der Dichtscheibe (15) ein, vorzugsweise ringförmiges, Dämpfungselement (18) aufweist.

6. Elektromotorischer Antrieb nach Anspruch 5,
**dadurch gekennzeichnet,**
**dass** das Federelement (17) zwischen der Motorwelle (4) und dem Dämpfungselement (18) der Dichtscheibe (15) im Dämpfungssystem (14) einliegt.

7. Elektromotorischer Antrieb nach einem der Ansprüche 1 bis 6,
**dadurch gekennzeichnet,**
**dass** das Dämpfungssystem (14) eine Wellenabdichtung (19) zwischen der Dichtscheibe (15) und der Motorwelle (4) aufweist.

8. Elektromotorischer Antrieb (1) nach einem der Ansprüche 1 bis 7,
**dadurch gekennzeichnet,**
**dass** die Dichtscheibe (15) auf deren Scheibenrückseite (20) eine Anzahl von - vorzugsweise kreisbogenartigen - Dämpfungsstellen (21) aufweist.

9. Elektromotorischer Antrieb nach Anspruch 7 oder 8,
**dadurch gekennzeichnet,**
**dass** die Dichtscheibe (15) einerseits und das Dämpfungselement (18) sowie die Wellenabdichtung (19) und die Dämpfungsstege (21) andererseits einstückig aus einem Zweikomponenten-Kunststoff mit einerseits vergleichsweise harter Dichtscheibe (15) und andererseits vergleichsweise weichem Dämpfungswerkstoff als Dämpfungselement (18), Wellenabdichtung (19) und Dämpfungssteg (21) hergestellt sind.

10. Elektromotorischer Antrieb nach einem der Ansprüche 7 bis 9,
**dadurch gekennzeichnet,**
**dass** die Wellenabdichtung (19) im Querschnitt etwa L-förmig ist und einen sich entlang der Motorwelle (4) erstreckenden axialen L-Schenkel (19a) sowie einen radialen L-Schenkel (19b) aufweist, der die Dichtscheibe (15) auf der dem Wellenlager (9,10) abgewandten Scheibenrückseite (20) hintergreift.

11. Elektromotorischer Antrieb nach einem der Ansprüche 1 bis 10,
**dadurch gekennzeichnet,**
**dass** die Dichtscheibe (15) und die Gleitscheibe (16) miteinander verrastet sind.

12. Elektromotorischer Antrieb nach Anspruch 11,
**dadurch gekennzeichnet,**
**dass** an die Dichtscheibe (15) eine Anzahl von Rastelementen (23), zweckmäßigerweise drei gleichmäßig verteilt angeordnete Rastelemente (23), mit zur Gleitscheibe (16) hin gerichteten Raststegen (23a) und daran vorgesehenen Rastnocken (23b) angeformt sind, die die Gleitscheibe (16) hintergreifen.

13. Elektromotorischer Antrieb nach einem der Ansprüche 1 bis 12,
**dadurch gekennzeichnet,**
**dass** die Dichtscheibe (15) schalenartig mit einem zum Wellenlager (9,10) hin gerichteten Ölfangkragen (22) ausgebildet ist.

14. Elektromotorischer Antrieb nach einem der Ansprüche 1 bis 13,
**dadurch gekennzeichnet,**
**dass** die Gleitscheibe (16) aus einem thermoplastischen Elastomer, insbesondere aus Hytrel, besteht.

15. Elektromotorischer Antrieb nach einem der Ansprüche 1 bis 14,
**gekennzeichnet durch**
eine zwischen das Wellenlager (9,10) und das Dämpfungssystem (14) eingelegte und sich umfangsseitig an der Lagerschale (7,8) abstützende Klemmbrille (11,12).
